(19) Europäisches Patentamt
European Patent Office
Office européen des brevets

(11) **EP 1 882 653 A2**

(12) **EUROPÄISCHE PATENTANMELDUNG**

(43) Veröffentlichungstag:
**30.01.2008 Patentblatt 2008/05**

(51) Int Cl.:
**B65G 65/44** *(2006.01)* **B65G 25/06** *(2006.01)*
**F15B 11/22** *(2006.01)*

(21) Anmeldenummer: **07112963.9**

(22) Anmeldetag: **23.07.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **24.07.2006 DE 102006034645**

(71) Anmelder: **MT-Energie GmbH & Co. KG**
**27404 Rockstedt (DE)**

(72) Erfinder: **Martens, Christoph**
**27404 Rockstedt (DE)**

(74) Vertreter: **von Ahsen, Erwin-Detlef et al**
**Von Ahsen, Nachtwey & Kollegen**
**Anwaltskanzlei**
**Wilhelm-Herbst-Strasse 5**
**28359 Bremen (DE)**

(54) **Schubbodenbunker mit hydraulischem Schubbodenantrieb**

(57) Schubbodenbunker mit einem Schubboden (10), welcher durch wenigstens zwei synchron zueinander betätigte Druckmittelzylinder (14,15) angetrieben ist, welche jeweils einen in einer Zylinderbohrung (20,21) geführten Kolben (16,17) aufweisen, der die Zylinderbohrung (20,21) in jeweils eine erste und eine zweite Druckkammer (22,23;24,25) unterteilt, wobei der Kolben (16,17) jeweils bei Beaufschlagung des ersten Druckraums (22,24) mit Druckmittel ausfahrbar und bei Beaufschlagung des zweiten Druckraums (23,25) mit Druckmittel einfahrbar ist. Zum synchronen Antrieb der beiden Zylinder (14,15), ist der zweite Druckraum (25) des ersten Zylinders (15) mit dem ersten Druckraum (22) des zweiten Zylinders (14) verbunden, wobei die dem zweiten Druckraum (25) des ersten Zylinders (15) und die dem ersten Druckraum (22) des zweiten Zylinders (14) zugeordneten Kolbenflächen zueinander gleich groß sind.

Fig. 1

EP 1 882 653 A2

## Beschreibung

Die Erfindung betrifft einen Schubbodenbunker mit einem Schubboden, welcher durch wenigstens zwei synchron zueinander betätigte Hydraulikzylinder angetrieben ist, welche jeweils einen in einer Zylinderbohrung geführten Kolben aufweisen, der die Zylinderbohrung in jeweils eine erste und eine zweite Kammer unterteilt, wobei der Kolben jeweils bei Beaufschlagung des ersten Druckraums mit Druckmittel ausfahrbar und bei Beaufschlagung des zweiten Druckraums mit Druckmittel einfahrbar ist.

Schubbodenbunker werden beispielsweise in Biogasanlagen zum Aufbewahren des in einen Biogasfermenter einzutragenden Feststoffes, wie zum Beispiel Grassilage, eingesetzt. Ein Beispiel für einen solchen Schubbodenbunker zeigt zum Beispiel die DE 10 2004 040 731 A1. Der darin gezeigte Schubbodenbunker weist zwei Schubböden zum Austragen der beispielsweise Grassilage aus dem Schubbodenbunker auf. Jeder dieser beiden Schubböden ist durch zwei synchron zueinander angetriebene Hydraulikzylinder betätigt.

Damit der Schubboden im Schubbodenbunker nicht verkantet, müssen die Hydraulikzylinder exakt synchron zueinander angetrieben werden. Ansonsten kann es zu einem Verklemmen des Schubbodens im Schubbodenbunker, und damit zu einem Ausfall desselben, kommen. Es ist bekannt, Hydraulikzylinder mittels Volumenteilern oder aufgrund elektronischer Regelungen synchron zueinander mit Druckmittel zu versorgen. Hydraulische Regelungen sind aber träge. Auch Volumenteiler arbeiten nicht 100%ig exakt. Darüber hinaus sind beide Lösungen relativ teuer und kompliziert.

Hiervon ausgehend liegt der Erfindung das Problem zugrunde, einen Schubbodenbunker der eingangs genannten Art derart weiterzubilden, daß der Schubboden auf einfache Weise durch zwei Zylinder zuverlässig antreibbar ist. Konkret soll eine einfache Lösung zum synchronen Antrieb der beiden Hydraulikzylinder vorgeschlagen werden.

Zur Lösung dieses Problems ist der erfindungsgemäße Schubbodenbunker dadurch gekennzeichnet, daß der zweite Druckraum des ersten Zylinders mit dem ersten Druckraum des zweiten Zylinders verbunden ist, wobei die dem zweiten Druckraum des ersten Zylinders und die dem ersten Druckraum des zweiten Zylinders zugeordnete Kolbenfläche gleich groß ist.

Erfindungsgemäß wird der zweite Druckmittelzylinder also mit dem aus dem ersten Druckmittelzylinder verdrängten Druckmittelvolumen angetrieben. Da die jeweils wirksamen Kolbenflächen exakt gleich groß sind, ergibt sich für beide Druckmittelzylinder auch ein exakt gleicher Hub. Die Synchronisierung der beiden Druckmittelzylinder ist also hier nur durch eine geschickte Verschaltung der Hydraulikzylinder bewerkstelligt. Elektronische Steuerungen und/oder Volumenteiler sind nicht erforderlich.

Die vorstehend beschriebene Synchronisation der Bewegungen der Druckmittelzylinder setzt ein völlig dichtes System ohne Leckage voraus. Sollte es dennoch einmal zu Leckagen kommen, ist nach einer Weiterbildung der Erfindung eine Gleichlaufüberwachung für die Bewegung der Kolben vorgesehen. Laufen diese asynchron, gibt die Gleichlaufüberwachung ein Signal, so daß die Zylinder synchronisiert werden können. Dieses kann manuell oder auch automatisch in Abhängigkeit der Signale der Gleichlaufüberwachung erfolgen.

Die Erfindung wird nachfolgend anhand eines in der Zeichnung dargestellten Ausführungsbeispiels näher erläutert. In der Zeichnung zeigt:

Fig. 1   einen Schubboden mit Hydraulikantrieb für einen Schubbodenbunker mit den Erfindungsmerkmalen in schematischer Draufsicht,

Fig. 2   einen Schubboden gemäß Fig. 1 mit zusätzlicher handbetriebener Gleichlaufkorrektur,

Fig. 3   einen Schubboden gemäß Fig. 1 mit zusätzlicher automatischer Gleichlaufkorrektur.

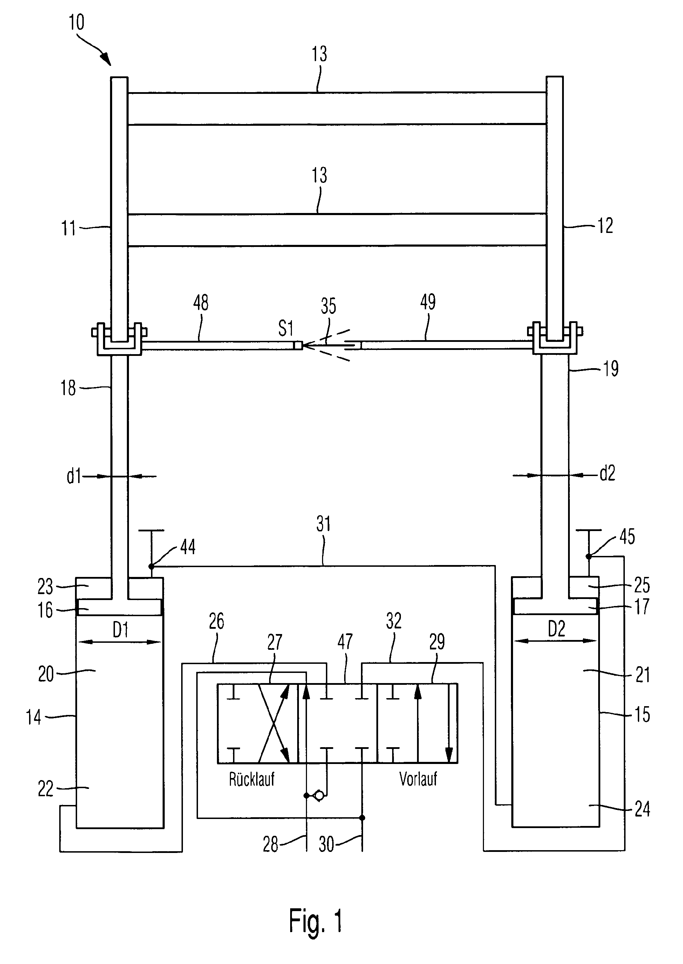

Der in Fig. 1 dargestellte Schubboden 10 eines Schubbodenbunkers weist in üblicher Weise zwei Längsstreben 11, 12 auf, welche durch Sprossen 13 miteinander verbunden sind. Jeder Längsstrebe 11, 12 ist ein eigener Hydraulikzylinder 14, 15 zugeordnet. Jeder Druckmittelzylinder 14, 15 weist einen Kolben 16, 17 auf, welcher mittels einer Kolbenstange 18, 19 mit der jeweiligen Längsstrebe 11, 12 verbunden ist. Die Kolben 16, 17 sind jeweils in einer Zylinderbohrung 20, 21 geführt, welche durch den jeweiligen Kolben 16, 17 in zwei Druckkammern 22 und 23 bzw. 24 und 25 unterteilt sind.

Der erste Druckraum 24 des ersten Zylinders 15 ist über eine Hydraulikleitung 26 durch ein erstes Ventil 27 mit einer Hydraulikpumpe 28 oder, alternativ, durch ein zweites Ventil 29 mit einem Pumpensumpf 30 verbindbar. Der zweite Druckraum 25 des ersten Zylinders 15 ist über eine Hydraulikleitung 31 mit dem ersten Druckraum 22 des zweiten Zylinders 14 verbunden. Der zweite Druckraum 23 des zweiten Zylinders 14 ist über eine Hydraulikleitung 32 entweder über ein erstes Ventil 33 mit der Pumpe 28 oder ein zweites Ventil 34 mit dem Pumpensumpf 30 verbunden.

Die insoweit beschriebene Vorrichtung arbeitet wie folgt:

Zum Ausfahren des Schubbodens 10, also um ihn von den Hydraulikzylindern 14, 15 wegzubewegen, werden die Ventile 27 und 34 geöffnet, während die Ventile 29 und 33 geschlossen werden. Bei eingeschalteter Pumpe 28 gelangt zunächst durch die Hydraulikleitung 26 Hydrauliköl in den ersten Druckraum 24 des ersten Zylinders 15. Hierdurch wird der Kolben 17 samt Kolbenstange 19 ausgefahren und dadurch gleichzeitig Hydrauliköl aus dem zweiten Druckraum 25 des ersten Zylinders 15 verdrängt. Dieses verdrängte Ölvolumen gelangt über die Hydraulikleitung 31 in den ersten Druckraum 22 des zweiten Zylinders 14, so daß auch der Kolben 16 samt Kolbenstange 18 ausgefahren wird. Das dadurch aus dem zweiten Druckraum 23 des zweiten Zylinders 14 verdrängte Ölvolumen gelangt über die Hydraulikleitung 32 zurück in den Pumpensumpf 30. Zum Einfahren des Schubbodens 10, also um ihn in Richtung auf die Zylinder 14, 15 zu bewegen, werden die Ventile 27 und 34 geschlossen, sowie die Ventile 29 und 33 geöffnet. Bei eingeschalteter Hydraulikpumpe 28 fließt das Hydrauliköl nun in die entgegengesetzte Richtung.

Die Zylinder 14, 15 sind so aufeinander abgestimmt, daß die wirksame Kolbenfläche des zweiten Druckraums 25 des ersten Zylinders 15 und die wirksame Kolbenfläche des ersten Druckraums 22 des zweiten Zylinders 14 exakt gleich groß sind. Dieses berechnet sich wie folgt:

Aufgrund der Druckmittelleitung 31 ist das dem zweiten Druckraum 25 des ersten Zylinders 15 entnommen Ölvolumen $\Delta V$ gleich dem den ersten Druckraum 22 des zweiten Zylinders 14 zugeführten Ölvolumen. Der Hub $\Delta H$ beider Zylinder 14, 15 soll gleich sein.

Damit ergibt sich: $\quad \Delta V = \Delta H * (\pi/4 * D_1^2 - \pi/4 * d_1^2) = \Delta H * \pi/4 * D_2^2,$

und damit: $\quad D_2^2 = (D_1^2 - d_1^2)$

wobei d1 der Durchmesser der Kolbenstange 19 des ersten Zylinders 15, D1 der Durchmesser des Kolbens 17 des ersten Zylinders 15 und D2 der Druchmesser des Kolbens 16 des zweiten Zylinders 14 ist.

Da, wie gesagt, das aus dem zweiten Druckraum 25 des ersten Druckmittelzylinders 15 verdrängte Ölvolumen exakt dem Ölvolumen entspricht, mit dem der erste Druckraum 22 des zweiten Zylinders 14 beaufschlagt wird (oder bei Einfahren der Zylinder 14, 15 entsprechend umgekehrt), ergibt sich für beide Druckmittelzylinder 14, 15 auch der exakt gleiche Hub. Die Druckmittelzylinder 14, 15 sind exakt synchronisiert.

Das vorstehend beschriebene Verhalten des Systems ergibt sich auch bei einem kompressiblen Druckmittel. Besonders vorteilhaft ist aber die Verwendung eines inkompressiblen Druckmittels, wie beispielsweise Hydrauliköl. Ferner wird eine entsprechende Dichtigkeit des hydraulischen Systems vorausgesetzt.

Verliert einer der Druckräume 22, 23, 24, 25 Druckmittel über die Dichtungen an den entsprechenden Kolben oder Kolbenstangen bzw. Druckmittelanschlüssen, wird die Synchronisation beeinflußt und das kann einen erheblichen Schaden am Schubboden anrichten. Um für diesen unwahrscheinlichen Fall dennoch Vorsorge zu treffen, kann der Synchronlauf der Druckmittelzylinder 14, 15 ständig überwacht werden. Hierfür ist ein Schalter 35 vorgesehen, welcher in Abhängigkeit der Position einer Gleichlaufstange 48, 49 schaltet. Der Schalter 35 ist an der Gleichlaufstange 48 befestigt, welche wiederum mit der Kolbenstange 18 verbunden ist. Gegenüber der Gleichlaufstange 48 befindet sich die andere Gleichlaufstange 49, welche mit der Kolbenstange 19 verbunden ist. Laufen die Kolbenstangen asynchron, stehen sich die Gleichlaufstangen 48, 49 nicht mehr gegenüber und ein Schaltkontakt am Schalter 35 wird ausgelöst. Unabhängig davon, in welcher Laufrichtung die Kolbenstangen 18, 19 verschoben wurden. Der Schaltkontakt am Schalter 35 löst einen Alarm aus und über Anschlüsse 44, 45 werden die Druckräume 22, 23, 24, 25 je nach Bedarf gefüllt oder etwas entleert, um die Druckverluste auszugleichen.

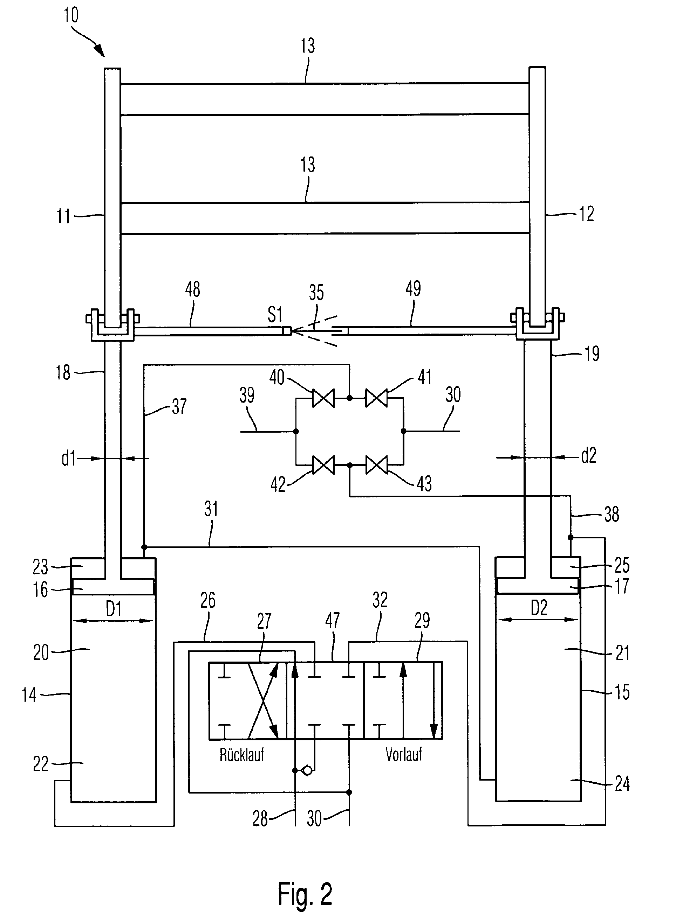

Nach einer anderen, in Fig. 2 gezeigten Variante der Erfindung wird durch Öffnen eines Ventils 40 über eine handbetriebene Hydraulikpumpe 39 Hydrauliköl in eine Druckmittelleitung 37 gepumpt. Mit Öffnen eines Ventils 43 wird aus dem Druckraum 25 eine entsprechende Menge Hydrauliköl in den Pumpensumpf 30 abgelassen, um den Kolben 17 und die Kolbenstange 19 in Vorlaufrichtung zu korrigieren. Dieses geschieht so lange, bis die Gleichlaufstangen 48 und 49 sich wieder gegenüberstehen. Damit bei dieser Gleichlaufkorrektur der Kolben 16 mit der Kolbenstange 18 sich nicht bewegt, wird das automatische Ventil in Grundstellung gestellt, wie in der Darstellung gemäß Fig. 2 gezeigt.

Soll der Kolben 17 und die Kolbenstange 19 in Rücklaufrichtung korrigiert werden, wird das Ventil 42 und 41 geöffnet. Die handbetriebene Hydraulikpumpe fördert nun das Druckmittel über das Ventil 42 und die Druckmittelleitung 38 in den Druckraum 25 und entsprechend fließt über die Druckmittelleitung durch das Ventil 41 das verdrängte Druckmittel zurück in den Pumpensumpf 30.

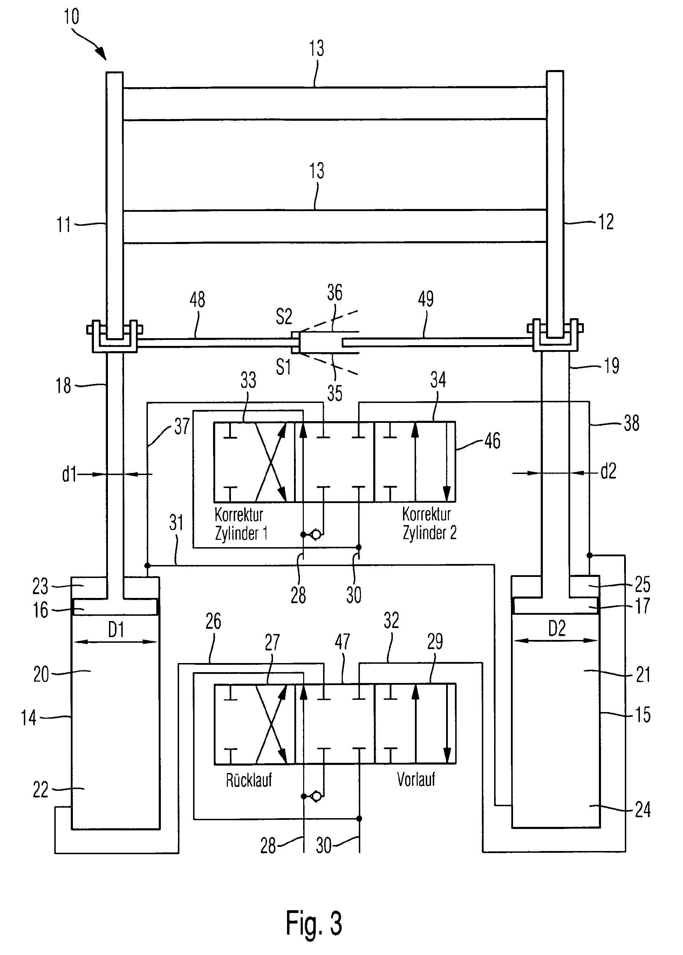

Eine solche Gleichlaufsteuerung kann auch automatisch erfolgen, wie in Fig. 3 gezeigt. Hier sind zwei Schalter 35, 36 an der Gleichlaufstange 48 angeordnet. Verschiebt sich die gegenüberliegende Gleichlaufstange 49 in Vorlaufrichtung wird der Kontakt am Schalter 36 ausgelöst. Verschiebt sich die gegenüberliegende Gleichlaufstange 49 in Rücklaufrichtung, wird der Kontakt am Schalter 35 ausgelöst. In beiden Fällen erfolgt eine Gleichlaufkorrektur durch ein automatisches Ausgleichsventil. Ist die Kolbenstange 18 weiter herausgefahren als die Kolbenstange 19, sind entsprechend die Gleichlaufstangen 48 und 49 versetzt und der Schalter 35 schaltet das automatische Ausgleichsventil 46 auf Ventilstellung 34. Dadurch wird das Druckmittel von der Hydraulikpumpe 28 in die Druckmittelleitung 37 und von dort in die Druckmittelleitung 31 gepumpt und fließt in den Druckraum 24. Entsprechend wird nun die Druckmittelleitung 38 zum Pumpensumpf 30 geöffnet, damit das zu verdrängende Druckmittel aus dem Druckraum 25 herausfließen kann.

Ist die Kolbenstange 19 weiter herausgefahren als die Kolbenstange 18 sind wiederum die Gleichlaufstangen 48 und 49 entsprechend versetzt und der Schalter 36 schaltet das automatische Ausgleichsventil 46 auf Ventilstellung 33. Dadurch wird das Druckmittel von der Hydraulikpumpe 28 in die Druckmittelleitung 38 gepumpt und fließt in den Druckraum 25. Entsprechend wird nun das zu verdrängende Druckmittel aus dem Druckraum 24 durch die Druckmittelleitung 31 und von dort in die Druckmittelleitung 37 zum Pumpensumpf 30 geleitet.

Bezugszeichenliste:

| | |
|---|---|
| 10 | Schubboden |
| 11 | Längsstrebe |
| 12 | Längsstrebe |
| 13 | Sprosse |
| 14 | Druckmittelzylinder |
| 15 | Druckmittelzylinder |
| 16 | Kolben |
| 17 | Kolben |
| 18 | Kolbenstange |
| 19 | Kolbenstange |
| 20 | Zylinderbohrung |
| 21 | Zylinderbohrung |
| 22 | Erster Druckraum |
| 23 | Zweiter Druckraum |
| 24 | Erster Druckraum |
| 25 | Zweiter Druckraum |
| 26 | Druckmittelleitung |
| 27 | Ventil |
| 28 | Pumpe |
| 29 | Ventil |
| 30 | Pumpensumpf |
| 31 | Druckmittelleitung |
| 32 | Druckmittelleitung |
| 33 | Ventil |
| 34 | Ventil |
| 35 | Schalter S1 |
| 36 | Schalter S2 |
| 37 | Druckmittelleitung |
| 38 | Druckmittelleitung |
| 39 | handbetriebene Hydraulikpumpe |
| 40 | Ventil |
| 41 | Ventil |
| 42 | Ventil |
| 43 | Ventil |
| 44 | Anschluß |
| 45 | Anschluß |
| 46 | automatisches Ausgleichsventil |
| 47 | automatisches Wegeventil |
| 48 | Gleichlaufstange |

49    Gleichlaufstange

**Patentansprüche**

1.  Schubbodenbunker mit einem Schubboden (10), welcher durch wenigstens zwei synchron zueinander betätigte Druckmittelzylinder (14, 15) angetrieben ist, welche jeweils einen in einer Zylinderbohrung (20, 21) geführten Kolben (16, 17) aufweisen, der die Zylinderbohrung (20, 21) in jeweils eine erste und eine zweite Druckkammer (22, 23; 24, 25) unterteilt., wobei der Kolben (16, 17) jeweils bei Beaufschlagung des ersten Druckraums (22, 24) mit Druckmittel ausfahrbar und bei Beaufschlagung des zweiten Druckraums (23, 25) mit Druckmittel einfahrbar ist, **dadurch gekennzeichnet, daß** der zweite Druckraum (25) des ersten Zylinders (15) mit dem ersten Druckraum (22) des zweiten Zylinders (14) verbunden ist, wobei die dem zweiten Druckraum (25) des ersten Zylinders (15) und die dem ersten Druckraum (22) des zweiten Zylinders (14) zugeordneten Kolbenflächen zueinander gleich groß sind.

2.  Schubbodenbunker nach Anspruch 1, **gekennzeichnet durch** eine Gleichlaufüberwachung für eventuelle asynchrone Bewegungen der Kolben (16, 17).

3.  Schubbodenbunker nach Anspruch 2, **gekennzeichnet durch** eine manuelle oder automatische Synchronisierung der Bewegungen der Kolben (16, 17) in Abhängigkeit von Signalen der Gleichlaufüberwachung.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004040731 A1